## Europäisches Patentamt

## European Patent Office

## Office européen des brevets

(11) Veröffentlichungsnummer: **0 065 033**
A2

(12) # EUROPÄISCHE PATENTANMELDUNG

(21) Anmeldenummer: **81104345.4**

(22) Anmeldetag: **05.06.81**

(51) Int. Cl.³: **F 24 D 19/10, F 24 D 3/00**

(30) Priorität: **14.05.81 CH 3138/81**

(43) Veröffentlichungstag der Anmeldung: **24.11.82** **Patentblatt 82/47**

(84) Benannte Vertragsstaaten: **AT BE CH DE FR GB IT LI LU NL SE**

(71) Anmelder: **GEBRÜDER SULZER AKTIENGESELLSCHAFT, Zürcherstrasse 9, CH-8401 Winterthur (CH)**

(72) Erfinder: **Herzog, Rudolf, bei der Kirche, CH-9555 Tobel (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(54) **Heizanlage zu einem Fernheizsystem.**

(57) Die Heizanlage weist einen Heißwasserkessel (2) mit einer in dessen Speiseleitung angeordneten Umwälzpumpe (3) auf, die den Heißwasserkessel (2) mit einer annähernd konstanten Speisewassermenge versorgt. Am Kesselaustritt zweigt eine Umlaufleitung (4) ab, die zum Eintritt der Umwälzpumpe (3) führt und mit einem Stellventil (5) versehen ist. Eine erste Regeleinrichtung (13) regelt die Austrittstemperatur des Heißwasserkessels (2) durch Beeinflussen der Feuerung (19). Eine zweite Regeleinrichtung (22) regelt die Kesseleintrittstemperatur durch Beeinflussen des Stellventils (5) in der Umlaufleitung (4). Es ist an der Umlaufleitung (4) ein Druckdifferenzmeßorgan (30) vorgesehen, das ein von der gemessenen Druckdifferenz abhängiges Regelsignal auf die zweite Regeleinrichtung (22) derart einwirken läßt, daß eine aus einer raschen Änderung der Druckdifferenz sich ergebende Störung der in der Rücklaufleitung (10) strömenden Wassermenge durch Verstellen des Stellventils (5) erheblich gedämpft wird.

Durch das zusätzliche Einwirken der Druckdifferenz auf das Stellventil läßt sich die Regelung der Heizanlage insofern verbessern, als die Austrittstemperatur des Heizwassers aus dem Kessel gut konstantgehalten werden kann.

0065033

P.5615

Gebrüder Sulzer Aktiengesellschaft, Winterthur / Schweiz

## Heizanlage zu einem Fernheizsystem

Die Erfindung betrifft eine Heizanlage nach dem Oberbegriff des Anspruchs 1. Es sind solche Heizanlagen bekannt, bei denen aus Wirtschaftlichkeitsgründen bei einer Vorlauftemperatur von beispielsweise $180^{\circ}$ C der Druck in der Vorlaufleitung auf 11,5 bar gesetzt ist. Da bei 11,5 bar die Verdampfungstemperatur bei $185^{\circ}$ C liegt, muss die Austrittstemperatur der Heizanlagen gegen oben verhältnismässig eng toleriert sein, um Verdampfungserscheinungen sowohl im Kessel wie auch in den Leitungen, Armaturen und Verbrauchern auszuschliessen. Verdampfungserscheinungen könnten bekanntlich nicht nur zu störenden Schlägen und Durchflussstörungen, sondern auch zu Erosionserscheinungen führen. Es hat sich nun gezeigt, dass in Netzen, in denen industrielle Wärmeverbraucher mit steilen Lastgradienten angeschlossen sind, die Kesselaustrittstemperatur verhältnismässig stark schwanken kann, sodass Gefahr besteht, dass die genannte enge Toleranz überschritten wird.

Es ist Aufgabe der Erfindung, die Regelung der Heizanlage erheblich zu verbessern, mit dem Ziel, die Austrittstemperatur des Kessels besser konstant zu halten, sodass die Toleranz für diese Austrittstemperatur verkleinert werden kann. Durch die Verkleinerung der Toleranz kann der Druck in der Vorlaufleitung vermindert werden, was eine Herabsetzung der Pumpenleistung und gegebenenfalls der Investitionskosten bringt, weil die Anlage schwächer dimensioniert werden kann. Die Verkleinerung der Toleranz kann aber auch, umgekehrt, eine Erhöhung der Vorlauftemperatur zulassen, sodass beispielsweise industrielle Verbraucher mit Heizwasser höherer Temperatur bedient werden können oder die Leistung bestehender Apparate erhöht werden kann.

Diese Aufgabe wird durch die Merkmale nach Anspruch 1 gelöst. Ueber die gestellte Aufgabe hinaus kann die Erfindung auch zum Erreichen einer höheren Betriebssicherheit eingesetzt werden.

Die Massnahme nach Anspruch 2 bringt den Vorteil, dass die zu korrigierende Störung direkt in ihrer Auswirkung auf den Regel-ablauf erfasst wird, was zu einer einfachen Lösung führt.

Anspruch 3 zeigt eine Lösung, bei der auf Netzpumpen verzichtet werden kann.

Anspruch 4 kann zu einer Vereinfachung der Schaltung führen.

Durch die Massnahmen nach Anspruch 5 kann die Speisewassermenge des Heisswasserkessels annähernd konstant gehalten werden, ohne dass die Mittel zum Versorgen des Heisswasserkessels mit Speisewasser besonderer Mengenregeleinrichtungen bedürften.

Anspruch 6 führt zu einer Lösung, bei welcher gewisse Nichtlinearitäten der Regeleinrichtungen selbsttätig kompensiert werden.

Auch die Alternative nach Anspruch 7 lässt eine Lösung ohne besondere Netzpumpe zu.

Die Mengenmessung nach Anspruch 8 hat den Vorteil, dass das Messorgan an der Stelle angeordnet ist, an der sie am besten vor Kavitationserscheinungen geschützt ist.

Die Ausführungsform nach Anspruch 9 gestattet eine Lösung, bei welcher die Umlaufleitung frei von Drosselstellen gehalten werden kann, sodass unabhängig von der Fördercharakteristik einer Kesselspeisepumpe die Speisewassermenge des Heisswasserkessels konstant bleibt, auch wenn die Druckdifferenz zwischen Vor- und Rücklaufleitung sich erhbelich ändert.

Anspruch 10 beschreibt weitere Massnahmen zur vorteilhaften Verwirklichung einer Lösung nach Anspruch 9.

Die Störgrössenaufschaltung nach Anspruch 11 gestattet, bei passender Wahl des Uebertragungsverhaltens der Aufschaltung noch verbleibende Störungen der Speisewassereintrittstemperatur praktisch vollständig zu kompensieren.

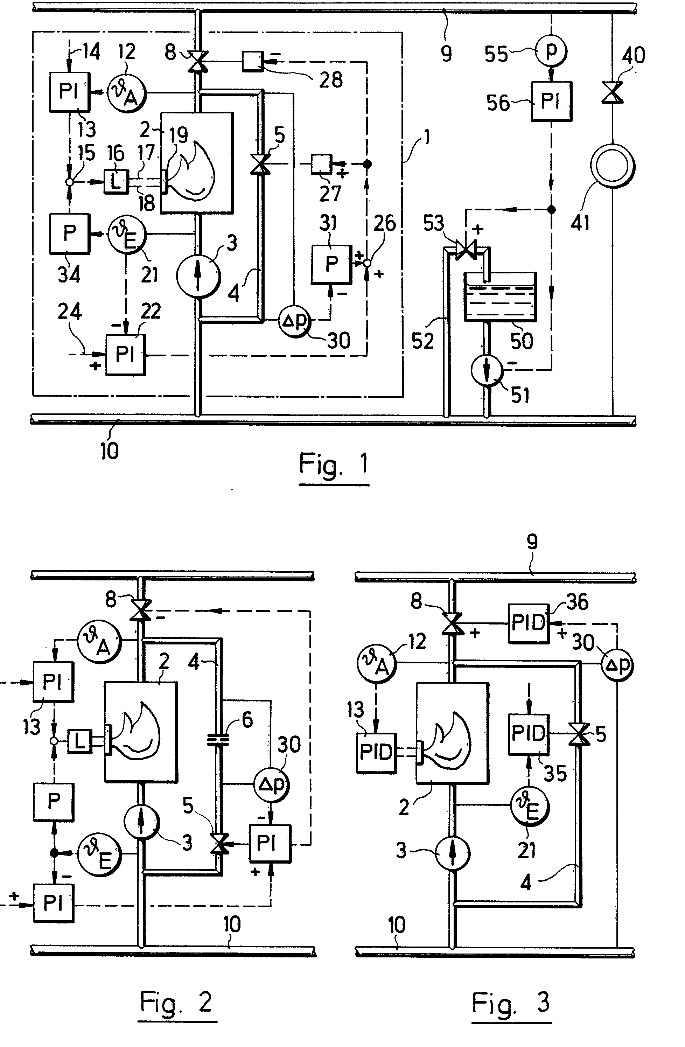

Die Erfindung wird nun an sieben in der Zeichnung schematisch dargestellten Ausführungsbeispielen näher erläutert. Figur 1 zeigt eine erste Ausführungsform der Heizanlage, wobei auch zusätzliche Teile des Fernheizsystems angedeutet sind. Die Figuren 2 bis 7 zeigen Alternativen der Heizanlage.

Figur 1 zeigt eine Heizanlage 1 mit einem Heisswasserkessel 2, einer Umwälzpumpe 3 und einer vom Austritt des Heisswasserkessels 2 zum Eintritt der Umwälzpumpe 3 führenden Umlaufleitung 4 mit einem Stellventil 5. Der Austritt des Heisswasserkessels 2 ist sodann über ein Drosselventil 8 an eine Vorlaufleitung 9 eines Fernheizsystems angeschlossen, während der Eingang der Umwälzpumpe 3 mit einer Rücklaufleitung 10 des Fernheizsystems verbunden ist.

ZwischenVorlauf- und Rücklaufleitung 9,10 sind je ein (mehrere, über) Ventil 40 nach Bedarf zu- und abschaltbare Wärmeverbraucher 41 angeschlossen, von denen nur einer zeichnerisch dargestellt ist. Im weiteren zeigt Figur 1, beispielsweise, ein Druckhaltesystem mit einem Wasserspeicher 50, einer daran angeschlossenen, zur Rücklaufleitung 10 führenden Druckhaltepumpe 51, und einer die Druckhaltepumpe 51 umgehenden Bypassleitung 52 mit Rücklaufventil 53. Dieses Druckhaltesystem 50 bis 53 wird von einer Regeleinrichtung gesteuert, die ein auf einen Regler 56 wirkendes Druckmessgerät 55 umfasst. Die Ausgangsignale des Reglers 56 wirken im dargestellten unterschiedlichen Sinne auf die Druckhaltepumpe 51 und das Rücklaufventil 53.

Am Heisswasseraustritt des Heisswasserkessels 2 ist ein Heisswassertemperaturfühler 12 angeschlossen, dessen Ausgangsignal als Istwert auf einen Heisswassertemperaturregler 13 geschaltet ist. Ueber einen Eingang 14 wird dem Heisswassertemperaturregler 13 ein Sollwert vorgegeben. Der Ausgang des Heisswassertemperaturreglers 13 wirkt über eine Additionsstelle 15 auf einen Lastgeber 16, der über Leitungen 17, 18 Führungsgrössen für Brennstoff und Luft auf eine Feuerung 19 des Heisswasserkessels 2 gibt.

Am Austrittstutzen der Umwälzpumpe 3 ist ein Eintrittstemperaturfühler 21 angeschlossen, dessen Messignal als Istwert einem Eintrittstemperaturregler 22 zugeführt wird. Dem Eintrittstemperaturregler 22 wird über einen Eingang 24 ein Sollwert für die Eintrittstemperatur eingegeben, der, wie später dargestellt werden wird, gleichzeitig ein Mass bildet für die Last des Heisswasserkessels 2. Der Ausgang des Reglers 22 wirkt über eine Additionsstelle 26 in unterschiedlichem Sinne über ein Stellorgan 27 auf das Stellventil 5 und über ein Stellorgan 28 auf das Drosselventil 8.

In der bisher beschriebenen Anlage bildet die Umwälzpumpe 3 ein Mittel, mit dem der Heisswasserkessel mit einer mindestens annähernd konstanten Menge Speisewassers versorgt wird. Der Heisswassertemperaturfühler 12 ist mit dem Heisswassertemperaturregler 13 und dem Lastgeber 16 zusammen eine erste Regeleinrichtung zum Regeln der Austrittstemperatur des Heisswasserkessels durch Beeinflussung der Feuerintensität, und der Eintrittstemperaturfühler 21 stellt mit dem Eintrittstemperaturregler 22, den Stellorganen 27 und 28 und den Ventilen 5 und 8 zusammen die zweite Regeleinrichtung zum Regeln der Kesseleintrittstemperatur durch Beeinflussen der durch die Umlaufleitung zurückströmenden Wassermenge dar.

In      Figur 1                               sind erfindungsgemäss an der Umlaufleitung 4  stromoberhalb und stromunterhalb des  Stellventils 5  die Eingänge eines Druckdifferenzmessgerätes 30 angeschlossen, das  über ein P-Glied 31 auf die Additionsstelle 26 derart einwirkt, dass bei steigendem Druckabfall $\Delta p$ das Stellventil 5  in schliessendem und das Drosselventil 8 in öffnendem Sinne bewegt werden. Das P-Glied 31 kann, zur Verbesserung der Regelgüte zusätzlich einen Differentialanteil (D) enthalten, es kann aber auch verzögernd wirken.

Zur weiteren Verbesserung der Regelschaltung ist in Figur 1 das Ausgangssignal des Eintrittstemperaturfühlers 21 im Sinne einer Störgrössenaufschaltung über ein Proportionalglied 34 auf die Additionsstelle 15 geschaltet.

Das Fernheizsystem kann noch weitere Verbraucher, zusätzliche Druckregelstationen und weitere Heizanlagen sowie Speicher, Expansionsgefässe etc. umfassen. Im allgemeinen sitzen an verschiedenen Stellen des Netzes - das, wie der Name sagt, nicht nur wie gezeichnet linear, sondern, im allgemeinen Fall, netzartig verläuft - Messgeräte für Temperatur und Druck. Die Signale dieser Messorgane führen zu einer Warte, von der aus Heizanlagen ein- und ausgeschaltet werden, oder deren Leistung kontinuierlich variert wird, beispielsweise durch Verstellen des Sollwertes für die Kesseleintrittstemperatur, die wegen der praktisch konstanten Speisewassermenge und konstanten Austrittstemperatur direkt ein Mass für die Kesselleistung bildet.

Die Anlage nach Figur 1 funktioniert wie folgt: Im normalen Betrieb wird von den in Betrieb stehenden Heizanlagen Heisswasser konstanter Temperatur, beispielsweise von 180°C, in die Vorlaufleitung 9 eingespeist. Dieses Wasser strömt über die eingeschalteten Verbraucher 41 in die Rücklaufleitung 10. Je nach Art und Lastzustand der jeweils eingeschalteten Verbraucher, variert die Temperatur des Wassers in der Rücklaufleitung 10 in verhältnismässig weiten Grenzen. Ist die Heizanlage 1 eingeschaltet, so drückt die Umwälzpumpe 3 Wasser aus der Rücklaufleitung 10 durch den Heisswasserkessel 2. Am Austritt des Kessels wird der Heisswasserstrom, je nach den Stellungen des Stellventils 5 und des Drosselventils 8, in einen ersten durch die Umlaufleitung 4 vor die Umwälzpumpe 3 zurückfliessenden und in einen zweiten durch das Drosselventil 8 in die Vorlaufleitung 9 fliessenden Teilstrom aufgeteilt. Durch den Regler 22 werden die Ventile 5 und 8 so eingestellt, dass die vom Eintrittstemperaturfühler 21 gemessene Temperatur dem über die Leitung 24 eingespeisten Sollwert entspricht. Die Austrittstemperatur des Kessels wird durch den Regler 13 durch Beeinflussung der Feuerung konstant gehalten. Diese Austrittstemperatur bildet zusammen mit dem Vorlaufdruck eine wichtige Bemessungsgrösse eines Fernheizsystems. Es ist erwünscht, diese Temperatur hoch anzusetzen, weil dadurch auch Prozesswärmeabnehmer, die eine höhere Temperatur benötigen, befriedigt werden können und weil dadurch die von den Abnehmern eingesetzten Wärmeübertrager entsprechend kleiner bemessen werden können. Anderseits verlangt jedoch eine höhere Vorlauftemperatur einen höheren Druck im Heisswasserkessel 2 und in der Vorlaufleitung 9, damit Verdampfungserscheinungen, die zu Kavitationserosionen im Heisswasserkessel wie auch in den angeschlossenen Armaturen, Leitungen und Verbrauchern führen können, mit Sicherheit vermieden werden. Wegen der Bemessung der Wandstärke der Leitungen, Armaturen und Apparate und wegen der Pumpenverluste ist es erwünscht, den Vorlaufdruck möglichst tief zu wählen. Es ergibt sich daher bei der Projektierung ein optimaler Vorlaufdruck und eine optimale Vorlauftemperatur, und es ist Aufgabe der Regelung, dafür zu sorgen, dass die gewählte Solltemperatur nur im noch zulässigen engen Rahmen überschritten wird. Es sind im allgemeinen Einrichtungen vorhanden, welche den Heisswasserkessel zu seinem Schutz abschalten, sobald die Grenze der zulässigen Temperatur überschritten wird. Solche Abschaltungen bilden erhebliche Störungen des Betriebs der Anlage; sie müssen daher vermieden werden.

Bei normalen, langsamen Aenderungen des Wärmebezuges durch die Verbraucher variieren Temperatur und Druck des über die Rücklaufleitung 10 der Heizanlage 1 zuströmenden Wassers entsprechend langsam. Steigt die Rücklauftemperatur an, so steigt auch die vom Eintrittstemperaturfühler 21 gemessene Mischtemperatur. Dies hat zur Folge, dass das Stellventil 5 in schliessender und das Drosselventil 8 in öffnender Richtung bewegt werden, bis die Mischtemperatur $\vartheta_E$ die dem Sollwert in der Leitung 24 entsprechende Höhe wieder erreicht hat. Solche langsame Störungen werden problemlos beherrscht.

Nun hat es sich gezeigt, dass bei brüsker Aenderung des Wärmebezuges, wie er beispielsweise beim Ein- und Ausschalten industrieller Verbraucher auftreten kann, die Störungen der Heisswassertemperatur der Heizanlagen oft so gross sind, dass die Kessel wegen Ueberschreitens der zulässigen Temperatur ausgeschaltet werden.

Die Erfindung beruht nun auf der Entdeckung, dass diese kritischen Störungen nicht auf die verhältnismässig langsamen Aenderungen der Rücklauftemperatur, sondern auf die viel schneller ablaufende Störung der Druckdifferenz zwischen Vor- und Rücklaufleitung zurückzuführen ist, die sich in einer brüsken Aenderung des Mischungsverhältnisses des heissen umlaufenden Wassers mit dem kalten Rücklaufwasser und damit in einer kräftigen Eintrittstemperaturstörung äussert. Nach der Erfindung wird dieses Phänomen entschärft.

Zu diesem Zwecke wird im Ausführungsbeispiel nach Figur 1 die vom Druckdifferenzmessgerät 30 an der Umlaufleitung 4 bestimmte Druckdifferenz, deren Aenderung zu einer Störung des Mischverhältnisses vor der Umwälzpumpe 3 und damit zu einer brüsken Störung der Kesseleintrittstemperatur führen kann, gemessen und mit dem so gebildeten Messignal auf dem Weg über das P-Glied 31 das Umlaufverhältnis beeinflusst: Erhöht sich das Druckgefälle $\Delta p$ an der Umlaufleitung 4, was zu einer Erhöhung der Umlaufmenge führen würde, so wird das Stellventil 5 in Schliessrichtung und gleichzeitig das Drosselventil 8 in öffnender Richtung bewegt. Sind diese Ventilbewegungen optimal aufeinander eingestellt, so wird bei plötzlichem Ansteigen des Rücklaufdruckes infolge Zuschaltens eines starken Verbrauchers das Stellventil 5 leicht geöffnet und das Drosselventil 8 leicht geschlossen. Durch die Oeffnungsbewegung des Stellventils wird der Widerstand der Umlaufleitung 4 verkleinert, sodass trotz des höheren Druckes in der Rücklaufleitung 10 etwa dieselbe Heisswassermenge vor die Umwälzpumpe 3 zurückströmt, und durch die Schliessbewegung des Drosselventils 8 wird vor diesem der Druck des Heisswassers etwas höher aufgestaut, sodass die Druckdifferenz $\Delta p$ an der Umlaufleitung weniger stark abfällt. Damit wird die schnelle Störung der Druckdifferenz durch eine genügend schnelle Gegenaktion zum grossen Teil oder voll kompensiert.

Die im Kennzeichen des Anspruchs 1 genannten zusätzlichen Regelmittel sind im Ausführungsbeispiel nach Figur 1 das Druckdifferenzmessgerät 30 und das Proportionalglied 31, dessen Ausgangssignal zusätzlich zum Ausgangssignal des Eintrittstemperaturreglers 22 auf die Ventile 5 und 8 einwirken.

Diese zusätzlichen Regelmittel kompensieren die schnelle Druckstörung in der Rücklaufleitung 10 weitgehend; es kann aber immer noch zu einer geringfügigen Abweichung der Eintrittstemperatur des Heisswasserkessels 2 kommen, einerseits weil die genannten zusätzlichen Regelmittel nicht ideal funktionieren und anderseits weil in der Rücklaufleitung 10 auch Temperaturstörungen auftreten, die allerdings langsamer Art sind. Durch die Störgrössenaufschaltung über das Proportionalglied 34 können auch diese Störungen weitgehend kompensiert werden, sodass die Heisswassertemperatur am Kesselaustritt sehr exakt konstant gehalten werden kann.

Im Ausführungsbeispiel nach Figur 2 wird der Druckabfall $\Delta p$ nicht am Stellventil 5, sondern an einer diesem vorgeschalteten Messblende 6 abgegriffen. Das Signal für den Druckabfall $\Delta p$ stellt ein Mass für die Umlaufmenge dar. Es wird als Istwert einem Umlaufmengenregler 33 eingegeben, der vom Eintrittstemperaturregler 22 eine Führungsgrösse für die Umlaufmenge erhält. Der Ausgang des Umlaufmengenreglers 33 beeinflusst sodann in unterschiedlichem Sinne das Stellventil 5 und das Drosselventil 8, ähnlich wie dies in Figur 1 der Fall ist.

Während in Figur 1 das P-Glied 31 zur optimalen Kompensation der Störungen dem jeweiligen Lastzustand entsprechend eingestellt werden sollte, wird bei der Schaltung nach Figur 2, sofern die Umwälzpumpe 3 einen konstanten Mengenstrom fördert, das Mischverhältnis der der Umwälzpumpe 3 über die Rücklaufleitung 10 beziehungsweise über die Umlaufleitung 4 zugeführten Wasserströme problemlos durch den Regler 33 konstant gehalten.

Da insbesondere die preisgünstigeren Pumpenaggregate keinen konstanten Mengenstrom fördern, sondern bei steigendem Gegendruck eine sinkende Fördermenge zeigen, ist die Schaltung nach Figur 3 so ausgebildet, dass die Pumpe stets gegen denselben Förderdruck arbeitet, sodass sie - bei konstanter Drehzahl - eine stets gleichbleibende Wassermenge fördert.

In Figur 3 wirkt die Eintrittstemperatur $\vartheta_E$ des Heisswasserkessels 2 über das Messgerät 21 auf einen Eintrittstemperaturregler 35, der das Stellventil 5 betätigt. Der am Stellventil 5 auftretende Druckabfall $\Delta p$ wirkt über einen Druckabfallregler 36 auf das Drosselventil 8. Damit wird die Druckdifferenz zwischen Vorlaufleitung 9 und Rücklaufleitung 10 stets selbsttätig unterteilt in einen konstanten Anteil $\Delta p$ und einen variablen Rest. Die Umwälzpumpe 3 fördert somit immer gegen konstanten Druck, sodass ihre Fördermenge, unabhängig von der Druckdifferenz zwischen Vorlaufleitung 9 und Rücklaufleitung 10, stets konstant bleibt. Aendert sich diese Druckdifferenz, so wird diese Aenderung sofort durch das Drosselventil 8 aufgefangen, ohne dass das Stellventil 5 bewegt würde. Dieses muss nur auf die relativ langsame Aenderung der Eintrittstemperatur des Heisswasserkessels 2 ansprechen. Sinngemäss kann das Stellventil 5 als langsames Ventil ausgebildet sein, während für den Antrieb des Drosselventils 8 zweckmässig mehr aufgewendet wird.

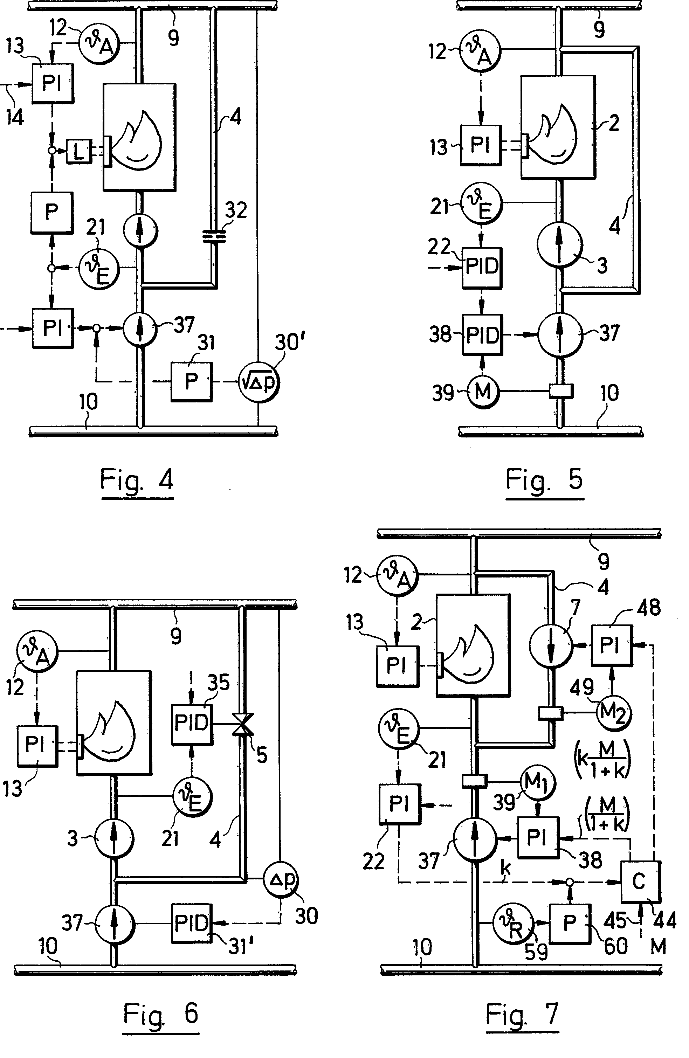

Im Gegensatz zu den bisherigen Ausführungsbeispielen weisen die nun folgenden Varianten nach Fig. 4 bis 7 eine Netzpumpe 37 auf, die in der Verbindungsleitung zwischen der Rücklauf-

- 11 -

0065033

leitung 10 und dem Austritt der Umlaufleitung 4 in die
Speiseleitung angeordnet ist. Durch diese verhältnismässig
teure Pumpe kann ein Drosselventil 8 und der damit verbundene laufende Drosselverlust vermieden werden.

Die Netzpumpe 37 weist
eine variable Fördermenge auf, indem sie beispielsweise
mit variabler Drehzahl angetrieben wird. Sie kann aber auch
verstellbare Schaufeln aufweisen oder saug- oder drucksseitig mit einer verstellbaren Drosseleinrichtung verbunden
sein. Die Fördermenge der Pumpe 37 wird primär vom Ausgangssignal des Eintrittstemperaturreglers 22 beeinflusst. Zudem ist ihr die Druckdifferenz zwischen Vorlauf- und Rücklaufleitung 9, 10 über ein Proportionalglied 31 als
Störgrösse aufgeschaltet. Im vorliegenden Fall ist das
Druckdifferenzmessgerät 30' radizierend ausgebildet. In der
Umlaufleitung 4 ist eine feste Drossel 32 vorgesehen.

Als zweite Regeleinrichtung sind in Figur 4 der Eintrittstemperaturfühler 21, der Eintrittstemperaturregler 22 und
die Netzpumpe 37 zu sehen, während die zusätzlichen Regelmittel nach dem Kennzeichen des Hauptanspruches im Druckdifferenzmessgerät 30' und im P-Glied 31 zu erkennen sind.
Analog wie in Figur 1 wirken die zusätzlichen Regelmittel
im Sinne einer Störgrössenaufschaltung.

Im Ausführungsbeispiel nach Figur 5 weist die Umlaufleitung 4 keinerlei Drosselmittel auf, sodass an ihrem Anfang
und Ende praktisch derselbe Druck herrscht. Die Umwälzpumpe 3 arbeitet somit stets auschliesslich gegen den gleich
bleibenden Druckabfall des Heisswasserkessels 2. Die Umlaufmenge ist daher, gleiche Pumpendrehzahl vorausgesetzt,
konstant. Die zwischen Umwälzpumpe 3 und Heisswasserkessel 2 gemessene Eintrittstemperatur $\vartheta_E$ wirkt auf den Eintrittstemperaturregler 22, dessen Ausgangssignal einem
Netzpumpenregler 38 als Führungsgrösse eingegeben wird. Die Netzpumpen-Fördermenge wird von einem Mengenmessgerät 39 gemessen und dem Netzpumpenregler 38 als Istwert zugeführt.

Die Einrichtung nach Figur 5 arbeitet wie folgt: Aendert sich die Druckdifferenz zwischen der Vorlaufleitung 9 und der Rücklaufleitung 10 so beginnt sich die Fördermenge der Netzpumpe 37 zu ändern. Das Mengenmessgerät 39 stellt diese Aenderung sofort fest und durch sein Signal wird über den Regler 38 die Netzpumpe 37 rasch korrigierend verstellt. Da diese Regelvorgänge sehr schnell ablaufen, führt eine solche Störung des Druckabfalls wegen der thermischen Trägheit des Systems nicht zu einer messbaren Störung der Eintritts- oder gar der Austrittstemperatur des Kessels.

Im Fall nach Figur 5 sind als zweite Regeleinrichtung der Eintrittstemperaturfühler 21, der Eintrittstemperaturregler 22 sowie die Netzpumpe 37 zu verstehen, während als zusätzliche Regelmittel das Mengenmessgerät 39 und der Netzpumpenregler 38 zu sehen sind. Die Ausführungsform nach Figur 5 zeichnet sich durch besonders geringe Drosselverluste aus. Wichtig ist bei dieser Lösung, dass die Netzpumpe 37 für rasche Aenderungen der Fördermenge gebaut ist.

Die Ausführungsform nach Figur 6 erinnert an Figur 3, indem die Eintrittstemperatur über einen Eintrittstemperaturregler 35 direkt auf das Stellventil 5 einwirkt. Unterschiedlich ist, dass die am Stellventil gemessene Druckdifferenz $\Delta p$ nicht auf ein Drosselventil 8, sondern über einen PID-Regler 31' auf die Netzpumpe 37 wirkt. Während bei Figur 3 das Drosselventil 8 Druckdifferenzänderungen zwischen Vorlaufleitung 9 und Rücklaufleitung 10 abfängt, tut dies in Figur 6 die Netzpumpe 37.

Figur 7 zeigt schliesslich ein Ausführungsbeispiel, bei dem statt einer Umwälzpumpe 3 in der Umlaufleitung 4 eine Rücklaufpumpe 7 vorgesehen ist. Hier wirkt das Ausgangssignal k des Eintrittstemperaturreglers 22 auf einen Rechner 44, dem als weitere Eingangsgrösse über eine Leitung 45 ein Signal M eingegeben wird, das dem Sollwert für die Speisemenge des Heisswasserkessels 2 entspricht. Der Rechner C bildet aus den beiden Eingangsgrössen k und M die Ausgangsgrössen $\frac{M}{1+k}$ und $k\frac{M}{1+k}$. Die erste dieser Ausgangsgrössen ist dem Netzpumpenregler 38 als Führungsgrösse aufgeschaltet, dem die von dem Mengenmessgerät 39 gemessene Netzpumpen-Fördermenge als Istwert eingegeben ist und der auf die Netzpumpe 37 einwirkt. Das zweite der beiden Ausgangsignale des Rechners 44 wirkt analog als Führungsgrösse auf einen Umlaufmengenregler 48, dem von einem Mengenmessgerät 49 die Fördermenge der Rücklaufpumpe 7 aufgeschaltet ist und dessen Ausgangssignal als Stellsignal auf die Rücklaufpumpe 7 wirkt.

Bei einer Aenderung der Druckdifferenz zwischen der Vorlaufleitung 9 und der Rücklaufleitung 10 ändern sich die Fördermengen der Netzpumpe 37 und der Rücklaufpumpe 7; beide Mengen werden jedoch sofort durch die raschen Mengenregelkreise über das zugeordnete Mengenmessgerät 39 beziehungsweise 49 und die zugehörigen Regler 38 beziehungsweise 48 korrigiert, sodass bei der vorhandenen relativ grossen thermischen Trägheit die Regelabweichung der Austrittstemperatur praktisch unmerklich bleibt. Zusätzlich wird nach Figur 7 als Störgrösse noch die Temperatur des rücklaufenden Wassers $\vartheta_R$, durch einen Temperaturfühler 59 gemessen und über ein Proportionalglied 60 dem Rechner 44 aufgeschaltet. Eine solche Aufschaltung kann natürlich auch bei den anderen Ausführungsbeispielen vorgenommen werden. Die Messstelle für den Temperaturfühler 59 kann an eine Stelle der Rücklaufleitung 10 vorverlegt sein und überdies können passende Uebertragungsglieder, beispielsweise Verzögerungsglieder, zwischen den Messfühlern 59 und dem P-Glied 60 eingebaut sein.

Im Beispiel nach Figur 7 werden als zweite Regeleinrichtung der Eintrittstemperaturfühler 21, der Regler 22, der Rechner 44 und die beiden Pumpen 7 und 37 verstanden, während als zusätzliche Regelmittel die Mengenmessgeräte 39 und 49 und die Regler 38 und 48 anzusehen sind.

Der Rechner 44 ist so ausgebildet, dass bei einer Aenderung der Eingangsgrösse k gleich das richtige Mischverhältnis der beiden Pumpenströme bei gewünschter Speisewassermenge M eingestellt wird.

Patentansprüche

1. Heizanlage zu einem im Verbundbetrieb arbeitenden Fernheizsystem,
    - mit einem Heisswasserkessel,
    - mit vorzugsweise in der Speiseleitung des Heisswasserkessels angeordneten Mitteln zum Versorgen des Heisswasserkessels mit einer mindestens annähernd konstanten Menge Speisewassers,
    - mit einer aus dem Bereich des Kesselaustritts zu den genannten Mitteln führenden Umlaufleitung, wobei diese Umlaufleitung im Bereich der genannten Mittel mit einer Rücklaufleitung und austrittseitig des Kessels mit einer Vorlaufleitung des Fernheizsystems verbunden ist,
    - mit einer ersten Regeleinrichtung zum Regeln der Austrittstemperatur des Heisswasserkessels durch Beeinflussen mindestens einer der Grössen Speisewassermenge und Feuerintensität,
    - und einer zweiten Regeleinrichtung zum Regeln der Kesseleintrittstemperatur durch Beeinflussen der durch die Umlaufleitung zurückströmenden Wassermenge,
    dadurch gekennzeichnet,
    dass zusätzliche Regelmittel vorgesehen sind, die auf ein von der Druckdifferenz zwischen Vor- und Rücklaufleitung abhängiges Regelsignal ansprechen und auf die zweite Regeleinrichtung derart einwirken, dass eine aus einer raschen Aenderung dieser Druckdifferenz sich ergebende Störung der durch die Rücklaufleitung strömenden Wassermenge mindestens erheblich gedämpft wird.

2. Heizanlage nach Anspruch 1, dadurch gekennzeichnet, dass die zusätzlichen Regelmittel zur Bildung des von der Druckdifferenz zwischen Vor- und Rücklaufleitung abhängigen Regelsignals ein an der Umlaufleitung angeschlossenes Druckdifferenzmessgerät umfassen.

3. Heizanlage nach Anspruch 2, dadurch gekennzeichnet, dass das Druckdifferenzmessgerät beidseits eines in der Umlaufleitung angeordneten Drosselorgans angeordnet ist.

4. Heizanlage nach Anspruch 3, dadurch gekennzeichnet, dass das Drosselorgan als Stellventil ausgebildet ist, das, als Bestandteil der zweiten Regeleinrichtung, die durch die Umlaufleitung strömende Wassermenge beeinflusst.

5. Heizanlage nach einem der Ansprüche 1 bis 4, dadurch gekennzeichnet, dass zwischen dem Austritt des Heisswasserkessels und der Vorlaufleitung ein Drosselventil angeordnet ist, das von der Druckdifferenz zwischen Vor- und Rücklaufleitung abhängigen Signal derart beeinflusst ist, dass es bei steigender Druckdifferenz seinen Strömungsquerschnitt vergrössert.

6. Heizanlage nach Anspruch 1, dadurch gekennzeichnet, dass das von der Druckdifferenz zwischen Vor- und Rücklaufleitung abhängige Regelsignal von einem Durchflussmengenmessgerät gebildet wird.

7. Heizanlage nach Anspruch 6, dadurch gekennzeichnet, dass das Durchflussmengenmessgerät in der Umlaufleitung angeordnet ist.

8. Heizanlage nach Anspruch 7, dadurch gekennzeichnet, dass das Durchflussmengenmessgerät in der Verbindungsleitung zwischen der Rücklaufleitung und der Einmündung der Umlaufleitung in die Speiseleitung angeordnet ist.

9. Heizanlage nach einem der Ansprüche 1 bis 8, dadurch gekennzeichnet, dass eine Netzpumpe variabler Fördermenge in der Verbindungsleitung zwischen Rücklaufleitung und Einmündung der Umlaufleitung in die Speiseleitung angeordnet ist, wobei diese Netzpumpe, als Bestandteil der zweiten Regeleinrichtung, von der Kesseleintrittstemperatur beeinflusst wird.

10. Heizanlage nach einem der Ansprüche 1 bis 8, dadurch gekennzeichnet, dass eine Netzpumpe variabler Fördermenge in der Verbindung/ sleitung, zwischen Rücklaufleitung und der Einmündung der Umlaufleitung in die Speiseleitung angeordnet ist, wobei diese Netzpumpe, als Bestandteil der zusätzlichen Regelmittel, von dem von der Druckdifferenz zwischen Vor- und Rücklaufleitung abhängigen Regelsignal beeinflusst wird.

11. Heizanlage nach einem der Ansprüche 1 bis 10, dadurch gekennzeichnet, dass die Kesseleintrittstemperatur zusätzlich der ersten Regeleinrichtung als Störgrösse aufgeschaltet ist.

1/2 0065033

Fig. 1

Fig. 2

Fig. 3

2/2

0065033

Fig. 4

Fig. 5

Fig. 6

Fig. 7